# EUROPÄISCHE PATENTSCHRIFT

(11) **EP 3 167 989 B1**
(45) Veröffentlichungstag und Bekanntmachung des Hinweises auf die Patenterteilung: **15.05.2019**
(21) Anmeldenummer: 16190133.5
(22) Anmeldetag: 22.09.2016
(51) Int. Cl.: B23C 3/30, B23C 3/34, B23Q 9/00, B23Q 9/02, B23P 6/00, F01D 5/00

(54) **FRÄSEINRICHTUNG SOWIE VERFAHREN ZUR DURCHFÜHRUNG EINER FRÄSBEARBEITUNG INNERHALB EINER NUT**
MILLING DEVICE AND METHOD FOR CARRYING OUT MILLING INSIDE A GROOVE
DISPOSITIF DE FRAISAGE ET PROCÉDÉ DE RÉALISATION D'UN FRAISAGE DANS UNE RAINURE

(30) Priorität: 16.11.2015 DE 102015222529
(43) Veröffentlichungstag der Anmeldung: 17.05.2017
(73) Patentinhaber: Siemens Aktiengesellschaft, 80333 München (DE)
(72) Erfinder: Clossen-von Lanken Schulz, Michael, 47661 Issum (DE); Obermayr, Stefan, 47199 Duisburg (DE)

(56) Entgegenhaltungen:
- EP-A1- 2 642 074
- WO-A1-2008/089116
- DE-A1-102008 000 480
- JP-A- H07 204 935
- US-A- 4 674 548
- US-A- 5 161 291
- US-A1- 2005 198 821

## Beschreibung

Die vorliegende Erfindung betrifft eine Fräseinrichtung mit einem um eine Werkzeugdrehachse rotierenden Fräswerkzeug gemäß dem Oberbegriff des Anspruchs 1. Ein Beispiel für eine solche Fräseinrichtung zeigt US 4 674 548 A. Ferner betrifft die vorliegende Erfindung ein Verfahren zur Durchführung einer Fräsbearbeitung innerhalb einer Nut, insbesondere innerhalb einer Schaufelfußaufnahmenut einer Strömungsmaschine, gemäß dem Oberbegriff des Anspruchs 13. Ein Beispiel für ein solches Verfahren zeigt DE 10 2008 000480 A1.

Turbinenlaufschaufeln und am Rotor ausgebildete Schaufelfußaufnahmenuten, in denen die Turbinenlaufschaufeln gehalten sind, sind während des Turbinenbetriebs sehr hohen mechanischen und auch chemischen Belastungen ausgesetzt. Unter anderem kommt es dadurch innerhalb der Schaufelfußaufnahmenuten zu Rissbildungen, welche die Lebensdauer des Turbinenrotors stark herabsetzen können. Im Rahmen von Wartungs- und Reparaturarbeiten werden Rissbefunde entsprechend aufgenommen, woraufhin die verbleibende Lebensdauer des Rotors rechnerisch ermittelt wird. Ist diese nicht zufriedenstellend, so müssen geeignete Gegenmaßnahmen getroffen werden. Diese können darin bestehen, dass die ermittelten Risse ausgeschliffen werden. Alternativ oder zusätzlich kann aber auch eine Reparatur der durch die Schaufelaufnahmenuten definierten Rotorklauen erfolgen. Hierzu können einzelne verschlissene Rotorklauen entfernt und durch Neuaufschweißung entsprechender Ersatzrotorklauen ersetzt werden. Ggf. ist auch eine Modifikation der Rotor- und/oder Schaufelaufnahmenutgeometrie möglich.

Bei der Aufnahme von Rissbefunden werden die Risse ausfindig gemacht und deren Risstiefe bestimmt, da die Risstiefe einen wesentlichen Einfluss auf nachfolgende Kalkulationen der Lebensdauer des Rotors und des Risswachstums hat. Zur Erfassung vorhandener Risse kommen normalerweise zerstörungsfreie Verfahren zum Einsatz, wie beispielsweise die Magnetpulver-Rissprüfung oder die Wirbelstrom-Rissprüfung (ET-Verfahren). Zur Bestimmung der Risstiefe werden die Risse solange mechanisch unter Verwendung eines Fräsers bearbeitet, bis der Rissgrund erreicht ist. Zu diesem Zweck wird immer abwechselnd Material abgetragen und dann unter Einsatz eines zerstörungsfreien Rissprüfungsverfahren ermittelt, ob der Grund des Risses bereits erreicht wurde. Auch hierbei können das Magnetpulver- oder Wirbelstromverfahren zum Einsatz kommen.

Ein wesentlicher Nachteil bei dieser Vorgehensweise besteht allerdings darin, dass die Fräsbearbeitung manuell durchgeführt wird. Entsprechend werden bei der Fräsbearbeitung keine definierten und/oder axial konstanten Bearbeitungskonturen erzeugt, was die Durchführung verlässlicher Berechnungen hinsichtlich der verbleibenden Lebensdauer und/oder des zu erwartenden Risswachstums erschwert.

Ausgehend von diesem Stand der Technik besteht eine Aufgabe der vorliegenden Erfindung darin, eine Fräseinrichtung der eingangs genannten Art sowie ein Verfahren zur Durchführung einer Fräsbearbeitung innerhalb einer Nut eines Bauteils unter Einsatz einer solchen Fräseinrichtung bereitzustellen, die verlässliche Berechnungen der verbleibenden Lebensdauer und/oder des zu erwartenden Risswachstums ermöglichen.

Zur Lösung dieser Aufgabe schafft die vorliegende Erfindung eine Fräseinrichtung gemäß Anspruch 1. Wird die Form des Gleitkörpers schablonenartig beispielsweise an die Form einer zu bearbeitenden Nut angepasst, ermöglicht der Gleitkörper eine genaue Führung des Fräswerkzeugs entlang der Erstreckungsrichtung der Nut, wodurch eine definierte Bewegung des Fräswerkzeugs während einer Fräsbearbeitung erzielt wird. Auch kann Dank des Gleitkörpers eine Fräsbearbeitung an schwer zugänglichen Stellen innerhalb einer Nut durchgeführt werden. Dabei kann über die Schwenkposition des Fräswerkzeugs eine definierte Zustellung eingestellt werden. Insgesamt ermöglicht die erfindungsgemäße Fräseinrichtung somit die Erzeugung definierter und axial konstanter Bearbeitungskonturen während der Bestimmung einer Risstiefe oder während des Ausschleifens eines Risses, um nur einige mögliche Anwendungsbeispiele zu nennen. Nach einer Bearbeitung von Rissen können Dank der definierten Bearbeitungskonturen auch weiterführende Berechnungen mit verlässlichen Ergebnissen durchgeführt werden, wie insbesondere Berechnungen zur Ermittlung der verbleibenden Lebensdauer des Bauteils oder des zu erwartenden Risswachstums. Durch mehrere an dem Gleitkörper verteilt angeordnete Federdruckstücke, die auswärts von dem Gleitkörper vorstehen und in Richtung des Gleitkörpers gegen eine Federkraft bewegbar sind, wird ein zwischen der Kontur des Bauteils und der Kontur des Gleitkörpers vorhandenes Spiel minimiert.

Gemäß einer Ausgestaltung der vorliegenden Erfindung ist der Gleitkörper aus Kunststoff hergestellt. Kunststoff ist zum einen dahingehend von Vorteil, dass sich dieser zur Herstellung des Gleitkörpers einfach bearbeiten lässt. Auch lässt sich der Gleitkörper ohne weiteres unter Verwendung eines Rapid-Prototyping-Verfahrens herstellen. Insbesondere wird ein Kunststoff mit guten Gleiteigenschaften verwendet, um auf diese Weise ein manuelles Bewegen des Gleitkörpers entlang eines Bauteils zu erleichtern.

Bevorzugt ist der Gleitkörper länglich ausgebildet und weist entlang seiner Längserstreckung einen im Wesentlichen konstanten Querschnitt auf. Auf diese Weise wird ein einfacher und preiswert herzustellender Gleitkörper erzielt.

Vorteilhaft weist der Gleitkörper Vorsprünge auf, die sich entlang der Längserstreckung des Gleitkörpers erstrecken und senkrecht zur Längserstreckung vorstehen. Derartige Vorsprünge dienen als Führung, während der Gleitkörper entlang eines Bauteils bewegt wird.

Vorteilhaft ist an dem Gleitkörper ein Handgriff angeordnet, insbesondere an einem oberen Bereich des Gleitkörpers. Mit einem solchen Handgriff wird das manuelle Bewegen des Gleitkörpers zur Realisierung der Vorschubbewegung erleichtert.

Gemäß einer Ausgestaltung der vorliegenden Erfindung ist eine Einstelleinrichtung vorgesehen, die derart ausgebildet ist, dass verschiedene Schwenkstellungen des Fräswerkzeugs einstellbar sind. Entsprechend lassen sich unterschiedliche Zustellungen des Fräswerkzeugs realisieren.

Bevorzugt weist die Einstelleinrichtung einen mit der Schwenkachse fest verbindbaren und auswärts von der Schwenkachse vorstehenden Anschlag auf, dessen Schwenkstellung durch ein Einstellmittel begrenzt wird, insbesondere durch eine Einstellschraube, wobei der Anschlag bevorzugt lösbar mit der Schwenkachse verbindbar ist, insbesondere über zumindest eine Fixierschraube. Durch Betätigen des Einstellmittels lässt sich die gewünschte Schwenkstellung einstellen, in welche der Anschlag mit dem Einstellmittel in Eingriff kommt. Eine lösbare Verbindung von Anschlag und Schwenkachse ist dahingehend von Vorteil, dass sich die Einstelleinrichtung justieren bzw. nullen lässt.

Vorteilhaft weist die Einstelleinrichtung eine Rückstellfeder auf, die über einen Hebelarm derart mit der Schwenkachse verbunden ist, dass die Federkraft der Rückstellfeder in Richtung einer eingestellten Schwenkstellung wirkt. Dank einer solchen Rückstellfeder wird eine Federung des Fräswerkzeugs bewirkt.

Bevorzugt ist an dem Gleitkörper ein Druckmittel derart vorgesehen, dass dieses wahlweise in eine Stellung überführt werden kann, in der es eine durch die Rückstellfeder bewirkte Federung außer Kraft setzt, wobei das Druckmittel insbesondere in Form einer Schraube vorgesehen ist. Dank eines solchen Druckmittels kann also die durch die Rückstellfeder bewirkte Federung wahlweise aufgehoben werden.

Gemäß einer Ausgestaltung der vorliegenden Erfindung ist eine Anzeigeeinrichtung vorgesehen, die derart ausgebildet ist, dass sie eine eingestellte Schwenkstellung des Fräswerkzeugs anzeigt. Entsprechend lässt sich die Zustellung des Fräswerkzeugs durch einen Nutzer in einfacher Art und Weise handhaben.

Vorteilhaft umfasst die Anzeigeeinrichtung einen Zeiger, der mit der Schwenkachse fest verbindbar ist, und eine Skala, auf die der Zeiger weist.

Insbesondere sind der Anschlag und der Zeiger einteilig ausgebildet, wodurch ein einfacher Aufbau erzielt wird.

Zur Lösung der eingangs genannten Aufgabe schafft die vorliegende Erfindung ferner ein Verfahren zur Durchführung einer Fräsbearbeitung innerhalb einer Nut, insbesondere innerhalb einer Schaufelfußaufnahmenut einer Strömungsmaschine, unter Verwendung einer Fräseinrichtung nach einem der vorhergehenden Ansprüche, wobei die Form des Gleitkörpers zumindest teilweise an die Form der zu bearbeitenden Nut angepasst ist und der Gleitkörper in die Nut eingesetzt und während der Fräsbearbeitung manuell durch die Nut bewegt wird.

Weitere Merkmale und Vorteile der vorliegenden Erfindung werden anhand der nachfolgenden Beschreibung einer Fräseinrichtung gemäß einer Ausführungsform der vorliegenden Erfindung unter Bezugnahme auf die beiliegende Zeichnung deutlich. Darin ist
Figur 1 eine schematische Darstellung einer Fräseinrichtung gemäß einer Ausführungsform der vorliegenden Erfindung, deren Gleitkörper in eine Nut eines zu bearbeitenden Bauteils eingesetzt ist;

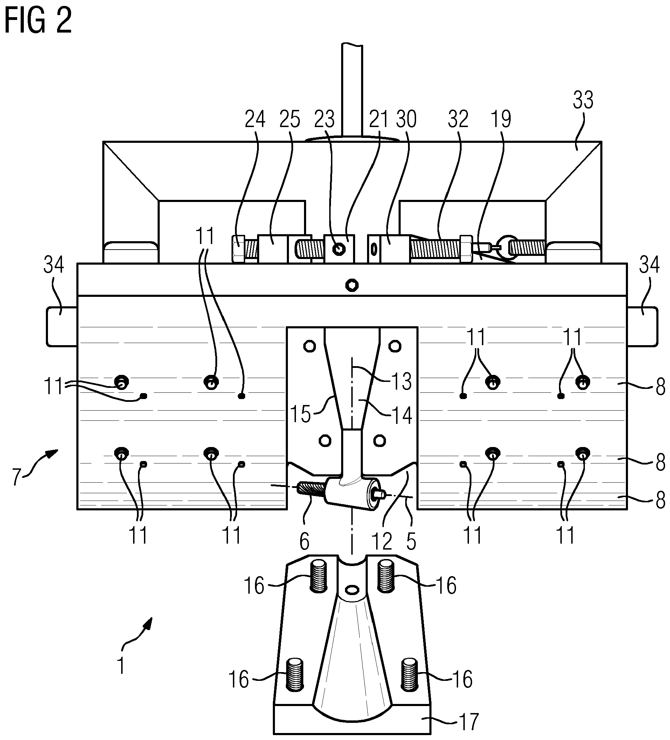

Figur 2 eine Seitenansicht der in Figur 1 dargestellten Fräseinrichtung, bei der eine mittlere Abdeckung abgenommen ist;

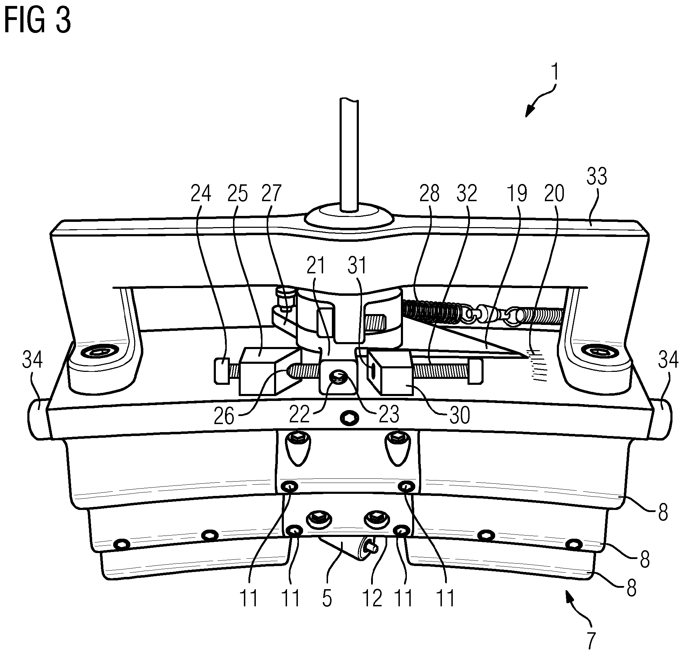

Figur 3 eine Ansicht ähnlich Figur 2, bei der die Abdeckung montiert ist;

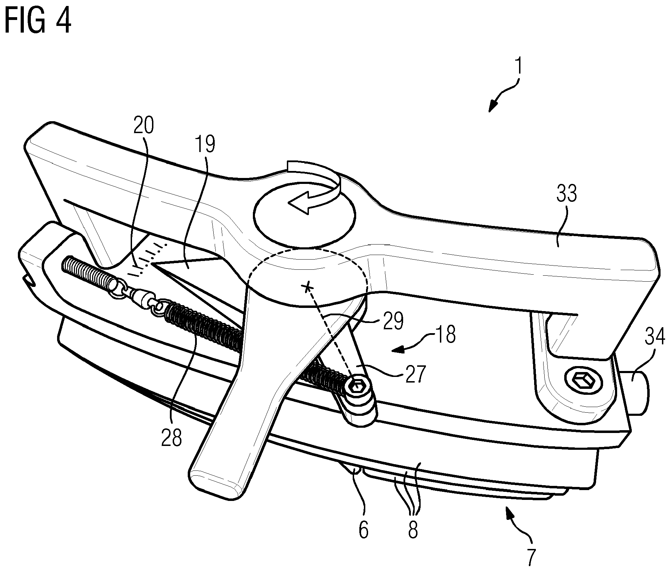

Figur 4 eine perspektivische Draufsicht der in Figur 1 dargestellten Fräseinrichtung von einer ersten Seite und

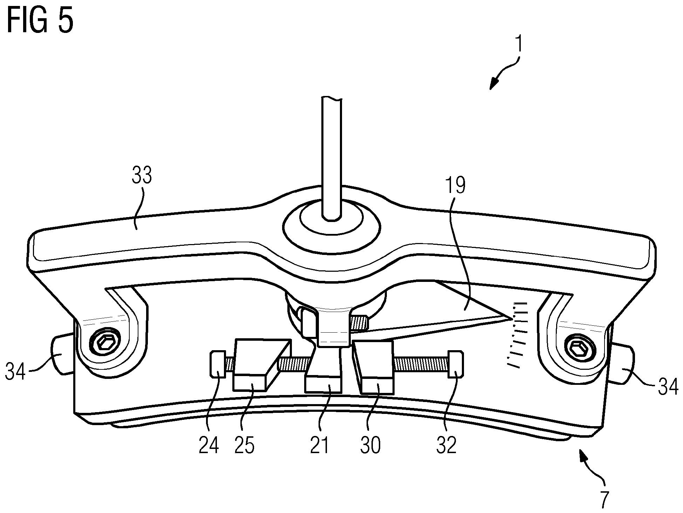

Figur 5 eine perspektivische Draufsicht der in Figur 1 dargestellten Fräseinrichtung von einer zweiten Seite.

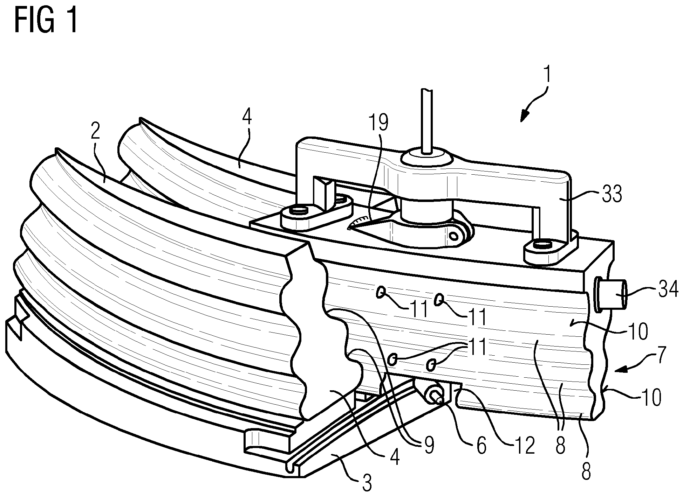

Die Figuren zeigen eine Fräseinrichtung 1 gemäß einer Ausführungsform der vorliegenden Erfindung, die dazu ausgelegt ist, eine Fräsbearbeitung innerhalb einer Schaufelfußaufnahmenut 2 eines in Figur 1 nur teilweise dargestellten Rotors 3 einer Strömungsmaschine durchzuführen, bei der eine Seitenwand einer die Schaufelaufnahmenut 2 definierenden Rotorklaue 4 spanend bearbeitet wird. Die Schaufelfußaufnahmenuten 2 des Rotors 3 sind identisch ausgeführt und weisen vorliegend einen entlang ihrer Längserstreckung konstanten, tannenbaumartig geformten Querschnitt auf.

Die Fräseinrichtung 1 umfasst als Hauptkomponenten ein um eine Werkzeugdrehachse 5 rotierendes Fräswerkzeug 6, das vorliegend durch einen Fingerfräser gebildet wird, und einen Gleitkörper 7, an dem das Fräswerkzeug 6 gehalten ist.

Der Gleitkörper 7 ist länglich ausgebildet und weist entlang seiner Längserstreckung einen im Wesentlichen konstanten Querschnitt auf, der an den tannenbaumförmigen Querschnitt der Schaufelfußaufnahmenuten 2 angepasst ist. Entsprechend kann der Gleitkörper 7 in eine Schaufelfußaufnahmenut 2 eingeführt und mit geringfügigem Spiel durch diese bewegt werden, wobei Vorsprünge 8 des Gleitkörpers 7, die sich entlang der Längserstreckung des Gleitkörpers 7 erstrecken und senkrecht zur Längserstreckung vorstehen, in zugehörige Vertiefungen 9 der Aufnahmenuten greifen. Zum Ausgleich des zwischen den einander gegenüber liegenden Rotorklauen 4 und dem Gleitkörper 7 vorhandenen Spiels sind verteilt über Seitenwände 10 des Gleitkörpers 7 Federdruckstücke 11 angeordnet, deren halbkugelförmig ausgebildeten freien Enden auswärts von dem Gleitkörper 7 vorstehen und in Richtung des Gleitkörpers 7 gegen eine Federkraft bewegbar sind. Im unteren Bereich des Gleitkörpers ist senkrecht zur Längserstreckung des Gleitkörpers 7 eine Ausnehmung 12 in Form einer durchgehenden Nut vorgesehen. Innerhalb dieser Ausnehmung ist das Fräswerkzeug 6 derart schwenkbar um eine sich senkrecht zur Werkzeugdrehachse 5 erstreckende Schwenkachse 13 gehalten, dass das Fräswerkzeug 6 zwischen einer Stellung, in der es vollständig in der Ausnehmung 12 aufgenommen ist, und einer Stellung, in der seine Spitze um ein vorbestimmtes Maß auswärts von dem Gleitkörper 7 vorsteht, wie es beispielsweise in Figur 1 dargestellt ist, bewegt werden kann. Ein die Schwenkachse 13 definierendes und das Fräswerkzeug 6 an seinem freien unteren Ende aufnehmendes Gehäuse 14 ist in einem im Innern des Gleitkörpers 7 ausgebildeten Aufnahmeraum 15, der über ein lösbar mit Schrauben 16 befestigtes Deckelelement 17 zugänglich ist, formschlüssig aufgenommen und erstreckt sich bis zur Oberseite des Gleitkörpers 7, wo es lösbar mit einer Einstelleinrichtung 18 verbunden ist, die es ermöglicht, verschiedene Schwenkstellungen des Fräswerkzeugs 6 manuell einzustellen. Die Einstelleinrichtung 18 umfasst eine Anzeigeeinrichtung mit einem an der Oberseite des Gleitkörpers 7 angeordneten Zeiger 19, der mit dem Gehäuse 14 und entsprechend mit der Schwenkachse 13 fest verbindbar ist, und einer an der Oberseite des Gleitkörpers 7 angeordneten Skala 20. Einteilig mit dem Zeiger 19 ist ein Anschlag 21 ausgebildet, der quer zur Schwenkachse 13 auswärts von dem Zeiger 19 in Richtung einer der Seitenwände 10 des Gleitkörpers 7 vorsteht. Durch den Anschlag 21 erstreckt sich eine durchgehende Gewindebohrung 22 in Richtung des Gehäuses 14, in der eine Fixierschraube 23 aufgenommen ist, über die eine lösbare Verbindung zwischen dem Zeiger 19 und dem Gehäuse 14 realisiert wird. Die Schwenkstellung des Anschlags 21 im Falle einer Schwenkbewegung des Fräswerkzeugs 6 um seine Schwenkachse 13 wird durch ein Einstellmittel begrenzt, das vorliegend durch eine Einstellschraube 24 gebildet wird, die in einer sich durch einen aufwärts vorstehenden Absatz des Gleitkörpers 7 erstreckenden Gewindebohrung 26 aufgenommen ist. An einem auswärts vorstehenden Vorsprung 27 des Zeigers 19 gegenüber dem Anschalg 21 ist ein freies Ende einer Rückstellfeder 28 befestigt, deren anderes freies Ende an dem Gleitkörper 7 gehalten ist. Die Position der Rückstellfeder 28 und deren Befestigung sind derart gewählt, dass die Rückstellfeder über einen Hebelarm 29 derart auf die Schwenkachse 5 wirkt, dass die Federkraft der Rückstellfeder 28 in Richtung einer eingestellten Schwenkstellung wirkt und den Anschlag 21 gegen die Einstellschraube 24 drückt. Gegenüber dem Absatz 25 ist ein weiterer aufwärts vorstehender Absatz 30 am Gleitkörper 7 derart ausgebildet, dass der Anschlag 21 zwischen den beiden Absätzen 25 und 30 positioniert ist. Durch den Absatz 30 erstreckt sich eine Gewindebohrung 31, in der ein Druckmittel in Form einer Druckschraube 32 derart aufgenommen ist, dass die Druckschraube 32 in Kontakt mit dem Anschlag 21 gebracht werden kann. Im oberen Bereich des Gleitkörpers 7 ist ein Handgriff 33 vorgesehen, der von einem Bediener mit der Hand gegriffen werden kann, um den Gleitkörper 7 zu bewegen. An den Stirnseiten des Gleitkörpers 7 sind Absaugstutzen 34 ausgebildet, die an eine nicht näher dargestellte Absauganlage angeschlossen werden können, wobei die Absaugstutzen 34 über ebenfalls nicht näher dargestellte Luftkanäle mit der Ausnehmung 12 verbunden sind.

Zur spanenden Bearbeitung einer Rotorklaue 4 wird der Gleitkörper 7 in einem ersten Schritt manuell in die entsprechende Schaufelfußaufnahmenut 2 eingesetzt und geringfügig in die Schaufelfußaufnahmenut 2 eingeschoben. Dabei kommen die Federdruckstücke 11 mit den einander gegenüber liegenden Seitenwänden der benachbarten Rotorklauen 4 in Kontakt und werden entgegen ihrer Federkraft einwärts gedrückt, wodurch ein zwischen den Rotorklauen 4 und dem Gleitkörper 7 vorhandenes Spiel ausgeglichen wird. Daraufhin wird an die Absaugstutzen 34 eine Absaugeinrichtung angeschlossen und anschließend eingeschaltet, wodurch im Bereich der Ausnehmung 12 ein Unterdruck erzeugt wird. In einem weiteren Schritt wird eine Zustellung des Fräswerkzeugs 6 eingestellt, indem die Einstellschraube 24 betätigt und das Fräswerkzeug um seine Schwenkachse 13 derart geschwenkt wird, dass es auswärts aus der Ausnehmung 12 vorsteht. Das gewünschte Maß der Zustellung kann anhand des auf die Skala 20 weisenden Zeigers 19 abgelesen werden. Nunmehr wird das Fräswerkzeug 6 um seine Werkzeugdrehachse 5 rotiert, und die Vorschubbewegung des Fräswerkzeugs 6 wird realisiert, indem der Gleitkörper 7 manuell durch die Schaufelfußaufnahmenut 2 bewegt wird. Auf diese Weise wird entlang der Rotorklaue 4 eine gefräste Nut erzeugt, wobei die anfallenden Späne abgesaugt werden. Die Rückstellfeder 28 wirkt während der Fräsbearbeitung federnd auf das Fräswerkzeug 6. Für den Fall, dass eine solche Federung nicht gewünscht ist, kann die Federung außer Kraft gesetzt werden, indem die Druckschraube 32 mit dem Anschlag 21 in Eingriff gebracht wird. Über die Fixierschraube 23 lässt sich die Einstelleinrichtung 18 justieren.

Unter Verwendung der Fräseinrichtung 1 können insbesondere an den Rotorklauen 4 vorhandene Risse bearbeitet werden, beispielsweise zur Bestimmung einer Risstiefe oder zum Ausfräsen eines Risses.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, welcher durch die nachfolgenden Ansprüche definiert ist, zu verlassen. Insbesondere kann die Verstellung des Fräswerkzeugs 6, die gemäß der zuvor beschriebenen Ausführungsform manuell erfolgt, auch elektrisch gesteuert und/oder geregelt werden. Ferner können auch die aktuelle Position bzw. Zustellung des Fräswerkzeugs und/oder weitere Daten über eine vorliegend nicht näher dargestellte elektronische Anzeigeeinrichtung angezeigt werden, wie beispielsweise die maximale Zustellung, das Bearbeitungsende oder dergleichen.

## Patentansprüche

1. Fräseinrichtung (1) mit einem um eine Werkzeugdrehachse (5) rotierenden Fräswerkzeug (6), wobei die Fräseinrichtung (1) einen Gleitkörper (7)aufweist, wobei das Fräswerkzeug (6) an einer sich quer, insbesondere senkrecht zur Werkzeugdrehachse (5) und durch den Gleitkörper (7) erstreckenden Schwenkachse (13) gehalten ist, und wobei der Gleitkörper (7) derart ausgebildet und die Positionierung des Fräswerkzeugs (6) derart gewählt ist, dass während einer Fräsbearbeitung eine Vorschubbewegung durch manuelles Bewegen des Gleitkörpers (7) und eine Zustellung durch Schwenken des Fräswerkzeugs (6) um die Schwenkachse (13, 14) erfolgt, **dadurch gekennzeichnet, dass**
an dem Gleitkörper (7) mehrere verteilt angeordnete Federdruckstücke (11) vorgesehen sind, die auswärts von dem Gleitkörper (7) vorstehen und in Richtung des Gleitkörpers (7) gegen eine Federkraft bewegbar sind.

2. Fräseinrichtung (1) nach Anspruch 1,
**dadurch gekennzeichnet, dass**
der Gleitkörper (7) aus Kunststoff hergestellt ist.

3. Fräseinrichtung (1) nach einem der vorhergehenden Ansprüche,
**dadurch gekennzeichnet, dass**
der Gleitkörper (7) länglich ausgebildet ist, und dass der Gleitkörper (7) entlang seiner Längserstreckung einen im Wesentlichen konstanten Querschnitt aufweist.

4. Fräseinrichtung (1) nach einem der vorhergehenden Ansprüche,
**dadurch gekennzeichnet, dass**
der Gleitkörper (7) Vorsprünge (8) aufweist, die sich entlang der Längserstreckung des Gleitkörpers (7) erstrecken und senkrecht zur Längserstreckung vorstehen.

5. Fräseinrichtung (1) nach einem der vorhergehenden Ansprüche,
**dadurch gekennzeichnet, dass**
an dem Gleitkörper (7) ein Handgriff (33) angeordnet ist, insbesondere an einem oberen Bereich des Gleitkörpers (7).

6. Fräseinrichtung (1) nach einem der vorhergehenden Ansprüche,
**dadurch gekennzeichnet, dass**
eine Einstelleinrichtung (18) vorgesehen ist, die derart ausgebildet ist, dass verschiedene Schwenkstellungen des Fräswerkzeugs (6) einstellbar sind.

7. Fräseinrichtung (1) nach Anspruch 6,
**dadurch gekennzeichnet, dass**
die Einstelleinrichtung (18) einen mit der Schwenkachse (13, 14) fest verbindbaren und auswärts von der Schwenkachse (13, 14) vorstehenden Anschlag (21) aufweist, dessen Schwenkstellung durch ein Einstellmittel begrenzt wird, insbesondere durch eine Einstellschraube (24), wobei der Anschlag (21) bevorzugt lösbar mit der Schwenkachse (13, 14) verbindbar ist, insbesondere über zumindest eine Fixierschraube (23).

8. Fräseinrichtung (1) nach Anspruch 6 oder 7,
**dadurch gekennzeichnet, dass**
die Einstelleinrichtung (18) eine Rückstellfeder (28) aufweist, die über einen Hebelarm (29) derart mit der Schwenkachse (13) verbunden ist, dass die Federkraft der Rückstellfeder (28) in Richtung einer eingestellten Schwenkstellung wirkt.

9. Fräseinrichtung (1) nach Anspruch 8,
**dadurch gekennzeichnet, dass**
an dem Gleitkörper (7) ein Druckmittel derart vorgesehen ist, dass dieses wahlweise in eine Stellung überführt werden kann, in der es eine durch die Rückstellfeder (28) bewirkte Federung außer Kraft setzt, wobei das Druckmittel insbesondere in Form einer Druckschraube (32) vorgesehen ist.

10. Fräseinrichtung (1) nach einem der Ansprüche 6 bis 8,
**dadurch gekennzeichnet, dass**
eine Anzeigeeinrichtung vorgesehen ist, die derart ausgebildet ist, dass sie eine eingestellte Schwenkstellung des Fräswerkzeugs (6) anzeigt.

11. Fräseinrichtung (1) nach Anspruch 10,
**dadurch gekennzeichnet, dass**
die Anzeigeeinrichtung einen Zeiger (19), der mit der Schwenkachse (13) fest verbindbar ist, und eine Skala (20) umfasst, auf die der Zeiger (19) weist.

12. Fräseinrichtung (1) gemäß den Ansprüchen 7 bis 11,
**dadurch gekennzeichnet, dass**
der Anschlag (21) und der Zeiger (19) einteilig ausgebildet sind.

13. Verfahren zur Durchführung einer Fräsbearbeitung innerhalb einer Nut eines Bauteils, insbesondere innerhalb einer Schaufelfußaufnahmenut (2) einer Strömungsmaschine, **dadurch gekennzeichnet, dass** hierfür eine Fräseinrichtung (1) nach einem der vorhergehenden Ansprüche verwendet wird, wobei die Form des Gleitkörpers (7) zumindest teilweise an die Form der zu bearbeitenden Nut angepasst ist und der Gleitkörper (7) in die Nut eingesetzt und während der Fräsbearbeitung manuell durch die Nut bewegt wird.

## Claims

1. Milling device (1) having a milling tool (6) that rotates about a tool rotation axis (5), wherein the milling device (1) has a slide (7), the milling tool (6) is held on a pivot axis (13) that extends transversely, in particular perpendicular, to the tool rotation axis (5) and through the slide (7), and wherein the slide (7) is designed and the position of the milling tool (6) is selected such that, during milling, a traversing movement is effected by manually moving the slide (7) and advance is effected by pivoting the milling tool (6) about the pivot axis (13, 14),
**characterized in that**
multiple compression spring parts (11) are provided distributed on the slide (7), project out from the slide (7) and can be moved, counter to a spring force, in the direction of the slide (7) .

2. Milling device (1) according to Claim 1,
**characterized in that**
the slide (7) is made of plastic.

3. Milling device (1) according to one of the preceding claims,
**characterized in that**
the slide (7) is elongate, and **in that** the cross section of the slide (7) is essentially constant over its longitudinal extent.

4. Milling device (1) according to one of the preceding claims,
**characterized in that**
the slide (7) has projections (8) that extend along the longitudinal extent of the slide (7) and project perpendicular to the longitudinal extent.

5. Milling device (1) according to one of the preceding claims,
**characterized in that**
a handle (33) is arranged on the slide (7), in particular on an upper region of the slide (7).

6. Milling device (1) according to one of the preceding claims,
**characterized in that**
there is provided an adjustment device (18) which is designed such that it is possible to set multiple pivot positions of the milling tool (6).

7. Milling device (1) according to Claim 6,
**characterized in that**
the adjustment device (18) has a stop (21) which can be securely connected to the pivot axis (13, 14) and projects out from the pivot axis (13, 14), and whose pivot position is limited by an adjustment means, in particular by an adjustment screw (24), wherein the stop (21) is preferably releasably connectable to the pivot axis (13, 14), in particular by means of at least one securing screw (23).

8. Milling device (1) according to Claim 6 or 7,
**characterized in that**
the adjustment device (18) has a return spring (28) which is connected to the pivot axis (13) via a lever arm (29) such that the spring force of the return spring (28) acts in the direction of a set pivot position.

9. Milling device (1) according to Claim 8,
**characterized in that**
a pressure means is provided on the slide (7) such that this means can be selectively switched to a position in which it overrides a spring-loading created by the return spring (28), wherein the pressure means is in particular provided in the form of a pressure screw (32).

10. Milling device (1) according to one of Claims 6 to 8,
**characterized in that**
there is provided a display device which is designed such that it displays a set pivot position of the milling tool (6).

11. Milling device (1) according to Claim 10,
**characterized in that**
the display device comprises a pointer (19) that can be securely connected to the pivot axis (13), and a scale (20) to which the pointer (19) points.

12. Milling device (1) according to Claims 7 to 11,
**characterized in that**
the stop (21) and the pointer (19) are in one piece.

13. Method for milling within a slot of a component, in particular within a blade root receiving slot (2) of a turbomachine,
**characterized in that**
a milling device (1) according to one of the preceding claims is used for this purpose, wherein the shape of the slide (7) at least partially matches the shape of the slot that is to be machined, and the slide (7) is inserted in the slot and is moved manually through the slot during milling.

## Revendications

1. Dispositif (1) de fraisage, comprenant un outil (16) de fraisage tournant autour d'un axe (5), le dispositif (1) de fraisage ayant une pièce (7) coulissante, l'outil (6) de fraisage étant maintenu sur un axe (13) de pivotement s'étendant transversalement, notamment perpendiculairement, à l'axe (5) de rotation de l'outil et à travers la pièce (7) coulissante et dans lequel la pièce (7) coulissante est constituée et le positionnement de l'outil (6) de fraisage est choisi, de manière à ce que, pendant un fraisage, il s'effectue un mouvement d'avance par déplacement manuel de la pièce (7) coulissante et une approche par pivotement de l'outil (6) de fraisage autour de l'axe (13, 14) de pivotement,
**caractérisé en ce que**,
sur la pièce (7) coulissante, sont réparties plusieurs pièces (11) de pression par ressort, qui font saillie vers l'extérieur de la pièce (7) coulissante et qui peuvent être déplacées dans la direction de la pièce (7) coulissante à l'encontre d'une force de ressort.

2. Dispositif (1) de fraisage suivant la revendication 1,
**caractérisé en ce que**
la pièce (7) coulissante est en matière plastique.

3. Dispositif (1) de fraisage suivant l'une des revendications précédentes,
**caractérisé en ce que**
la pièce (7) coulissante est oblongue et **en ce que** la pièce (7) coulissante a, le long de son étendue en longueur, une section transversale sensiblement constante.

4. Dispositif (1) de fraisage suivant l'une des revendications précédentes,
**caractérisé en ce que**
la pièce (7) coulissante a des saillies (8), qui s'étendent suivant l'étendue en longueur de la pièce (7) coulissante et qui font saillie perpendiculairement à l'étendue longitudinale.

5. Dispositif (1) de fraisage suivant l'une des revendications précédentes,
**caractérisé en ce qu'**une poignée (33) est montée sur la pièce (7) coulissante, notamment sur une partie supérieure de la pièce (7) coulissante.

6. Dispositif (1) de fraisage suivant l'une des revendications précédentes,
**caractérisé en ce qu'**il est prévu un dispositif (18) de réglage constitué de manière à pouvoir régler diverses positions de pivotement de l'outil (6) de fraisage.

7. Dispositif (1) de fraisage suivant la revendication 6, **caractérisé en ce que**
le dispositif (18) de réglage a une butée (21), qui peut être assemblée fixement à l'axe (13, 14) de pivotement, qui fait saillie vers l'extérieur à partir de l'axe (13, 14) de pivotement et dont la position de pivotement est limitée par un moyen de réglage, notamment par une vis (24) de réglage, la butée (21) étant assemblée, de préférence de manière amovible, à l'axe (13, 14) de pivotement, notamment par au moins une vis (23) de fixation.

8. Dispositif (1) de fraisage suivant la revendication 6 ou 7,
**caractérisé en ce que**
le dispositif (18) de réglage a un ressort (28) de rappel, qui est relié par un bras (29) de levier à l'axe (13) de pivotement, de manière à ce que la force du ressort (28) de rappel s'applique dans la direction d'une position de pivotement réglée.

9. Dispositif (1) de fraisage suivant la revendication 8,
**caractérisé en ce que**,
sur la pièce (7) coulissante, est prévu un moyen de pression, de manière à ce que celui-ci puisse être mis, au choix, dans une position dans laquelle il applique une force à l'exception de celle provoquée par le ressort (28) de rappel, le moyen de pression étant prévu notamment sous la forme d'une vis (32) de pression.

10. Dispositif (1) de fraisage suivant l'une des revendications 6 à 8,
**caractérisé en ce qu'**il est prévu un dispositif d'affichage constitué de manière à afficher une position de pivotement réglée de l'outil (6) de fraisage.

11. Dispositif (1) de fraisage suivant la revendication 10,
**caractérisé en ce que**
le dispositif d'affichage comprend une aiguille (19), qui est assemblée fixement à l'axe (13) de pivotement, et un cadran (20) sur lequel pointe l'aiguille (19).

12. Dispositif (1) de fraisage suivant l'une des revendications 7 à 11,
**caractérisé en ce que**
la butée (21) et l'aiguille (19) sont constituées d'une seule pièce.

13. Procédé pour effectuer un fraisage au sein d'une rainure d'une pièce, notamment au sein d'une rainure (2) de réception d'une emplanture d'aube d'une turbomachine,
**caractérisé en ce que**
l'on utilise à cet effet un dispositif (1) de fraisage suivant l'une des revendications précédentes, la forme de la pièce (7) coulissante étant adaptée, au moins en partie, à la forme de la rainure à fraiser et la pièce (7) coulissante étant insérée dans la rainure et étant déplacée dans la rainure manuellement pendant le fraisage.
